# EUROPÄISCHE PATENTSCHRIFT

(11) **EP 2 133 593 B1**
(45) Veröffentlichungstag und Bekanntmachung des Hinweises auf die Patenterteilung: **27.10.2010**
(21) Anmeldenummer: 09159375.6
(22) Anmeldetag: 05.05.2009
(51) Int. Cl.: F16H 3/08, F16H 57/00, F16H 3/093

(54) **Anordnung zur Rasselreduzierung bei einem Getriebe**
Assembly for reducing rattle in a transmission system
Agencement de réduction des tremblements dans une boîte de vitesse

(30) Priorität: 09.06.2008 DE 102008002294
(43) Veröffentlichungstag der Anmeldung: 16.12.2009
(73) Patentinhaber: ZF Friedrichshafen AG, 88038 Friedrichshafen (DE)
(72) Erfinder: Hoffmann, Rayk, 88048 Friedrichshafen (DE)

(56) Entgegenhaltungen:
- EP-A- 1 111 274
- WO-A-2005/085681
- WO-A-2007/128689
- DE-A1-102006 039 391

## Beschreibung

Die vorliegende Erfindung bezieht sich auf eine Anordnung zur Rasselreduzierung bei einem Getriebe in Vorgelegebauweise, umfassend zwei Vorgelegewellen und eine Hauptwelle gemäß dem Oberbegriff des Patentanspruchs 1, und wie sie aus der WO 2 007 128 689 A bekannt ist.

Aus dem Stand der Technik sind Mehrstufenschaltgetriebe mit zwei Vorgelegewellen und einer zentralen Hauptwelle bekannt. Hierbei sind die einzelnen Gänge durch Aktivierung jeweils einer Übersetzungsstufe, umfassend ein auf der Hauptwelle angeordnetes Losrad und jeweils ein auf jeder Vorgelegewelle angeordnetes Festrad die miteinander in Wirkverbindung stehen, erzeugt werden, wobei die Aktivierung der Übersetzungsstufen durch Betätigung eines Schaltelementes erfolgt, mittels dessen das jeweilige Losrad mit der Hauptwelle drehfest verbindbar ist. Demnach laufen die auf der Hauptwelle angeordneten Losräder in Umfangsrichtung lose auf der Hauptwelle mit und werden nur beim Betrieb der zugehörigen Gangstufe drehfest mit der Hauptwelle verbunden, um Drehmoment zu übertragen.

Klapper- und Rasselgeräusche werden von unbelasteten Getriebekomponenten, wie Losrädern, Synchronringen und Schiebemuffen von niederfrequenten Torsionsschwingungen verursacht, die durch die An- oder Abtriebswelle in das Getriebe eingeleitet werden. Losteilschwingungen können auch durch die Eigenerregungen von getriebeinternen Bauteilen erzeugt werden, welche in der Regel auf Verzahnungsfehler, Zahnflankenspiele und/oder Unwuchten zurückzuführen sind. Der Unterschied zwischen Rasseln und Klappern ist folgender: Losteilunruhen, die im Zug- oder Schubbetrieb auftreten, werden als Rasseln bezeichnet, wohingegen das Klappern nur im Leerlauf, d.h. während der Neutralstellung des Getriebes, auftritt.

Die Losräder eines Mehrstufenschaltgetriebes mit zwei Vorgelegewellen und einer zentralen Hauptwelle sind in radialer Richtung mit Spiel auf der Hauptwelle gelagert, um einen Lastausgleich zwischen den Kraftflüssen über die beiden Vorgelegewellen zu ermöglichen und werden von den Verzahnungen der Festräder der Vorgelegewellen innerhalb ihres radialen Bewegungsspielraumes auf der Hauptwelle radial geführt, wobei bei eingelegter Gangstufe sich das entsprechende Losrad unter Last in den Verzahnungen der Festräder der Vorgelegewellen zentriert. Dadurch wird bei der Drehmomentübertragung ein optimaler Lastausgleich zwischen den Vorgelegewellen erreicht. Die Losräder, die nicht eingelegten Gangstufen zugeordnet sind, befinden sich im lastfreien Zustand und schwimmen in radialer Richtung und in Umfangsrichtung innerhalb des Zahnspiels.

In axialer Richtung sind die Losräder in der Regel durch Anlaufscheiben auf der Hauptwelle geführt, wobei jedes Losrad zwischen zwei auf der Hauptwelle angeordneten Anlaufscheiben angeordnet ist. Dennoch entsteht ein Spiel auch in axialer Richtung, was durch Fertigungstoleranzen und durch eine zur Ölschmierung erforderliche Spalte bedingt ist.

Durch die bewegliche Lagerung der Losräder in radialer Richtung und durch das axiale Spiel entsteht jedoch ein unangenehmes Rasselgeräusch im Betrieb, weil die Zahnräder der nicht unter Last mitlaufenden Gangstufen, die sich außerhalb des Kraftflusses befinden, Beschleunigungen in Umfangsrichtung, in axialer und in radialer Richtung erfahren, die durch Fertigungs-Ungenauigkeiten und durch Drehschwingungen vom An- und/oder Abtrieb verursacht werden. Durch diese Beschleunigungen werden die Losräder in ihrem Bewegungsspielraum derart bewegt, dass sie an den anliegenden Bauteilen anschlagen. Insbesondere schlagen die Zahnflanken der miteinander im Eingriff stehenden Zähne im Rahmen ihres Zahnflankenspiels gegeneinander, wodurch das Rasselgeräusch der nicht unter Last mitlaufenden Gangstufen hauptsächlich verursacht wird.

Aus der DE 103 34 460 A1 der Anmelderin ist ein Antriebsstrang eines Kraftfahrzeugs, insbesondere mit einem Allradantrieb bekannt, umfassend ein von einem Motor angetriebenes Schaltgetriebe, bei dem in den Antriebsstrang mindestens eine Bremse geschaltet ist, über die üblicherweise durch Lastwechsel verursachte Drehschwingungen im Antriebsstrang abbremsbar sind.

Die zumindest eine Bremse ist hierbei vorzugsweise im Verteilergetriebe angeordnet; alternativ kann sie zwischen dem Verteilergetriebe und den Hinterrädern oder in Antriebsrichtung vor oder nach dem Schaltgetriebe angeordnet sein.

Im Rahmen der DE 103 34 460 A1 wird zudem vorgeschlagen, im Antriebsstrang Sensoren zur Erfassung von Lastwechseln anzuordnen; auf diese Weise kann der Antriebsstrang nach Erfassung von Lastwechseln durch die Sensoren abgebremst werden. Hierbei sind die Sensoren vorzugsweise an den Rädern des Fahrzeugs angeordnet.

Aus der DE 10234579 A1 ist ein Getriebe, insbesondere für ein Nutzfahrzeug, bekannt, enthaltend eine Getriebebremse, eine Schmierölpumpe und mindestens eine Vorgelegewelle, wobei die Getriebebremse und die Schmierölpumpe eine mit einer Vorgelegewelle verbundene Einheit bilden.

Aus der DE 102006008207 A1 ist ein Verfahren zum Vermindern von unerwünschten Geräuschen, insbesondere Rasselgeräuschen, in einem Parallelschaltgetriebe, insbesondere einem inaktiven Teilgetriebe eines Parallelschaltgetriebes bekannt, wobei das Parallelschaltgetriebe wenigstens zwei auf eine gemeinsame Abtriebswelle wirkende Teilgetriebe mit mehreren Gängen und je einer Kupplung für jedes Teilgetriebe aufweist, wobei eine Antriebswelle eines Motors selektiv über eines der Teilgetriebe und geschlossener zugehöriger Kupplung in Drehmomenteingriff mit der Ausgangswelle bringbar ist. Hierbei wird vorgeschlagen, die geschlossene Kupplung des aktiven Teilgetriebes bei einem Auftreten unerwünschter Geräusche derart zu betätigen, dass sich ihr Schlupf verändert. Insbesondere wird vorgeschlagen, die geschlossene Kupplung des aktiven Teilgetriebes derart zu betätigen, dass ihr Schlupf zunimmt.

Des weiteren ist aus der DE 10 2004 057 126 A1 eine Einrichtung zur Reduzierung der Axialbewegung der auf der Hauptwelle angeordneten Losräder bei einem Getriebe mit zumindest zwei Vorgelegewellen bekannt, wobei eine auf der Hauptwelle angeordnete Anpresseinrichtung für zumindest eines der Hauptwellenräder das zugehörige Hauptwellenrad in axialer Richtung gegen eine Anlaufscheibe drückt. Dadurch sollen unerwünschte Rasselgeräusche vermieden werden.

Ferner ist aus der noch nicht veröffentlichten DE 10 2008000820 der Anmelderin eine Einrichtung zur Reduzierung von Rasselgeräuschen in einem Mehrstufengetriebe mit zwei Vorgelegewellen bekannt, bei der zumindest ein Zahnrad in zumindest einer Gangstufe des Mehrstufengetriebes eine konische Verzahnung aufweist, wobei das Zahnrad mit der konischen Verzahnung oder ein mit diesem Zahnrad kämmendes Zahnrad axial verschiebbar gelagert ist und wobei das die konische Verzahnung aufweisende Zahnrad und das mit diesem Zahnrad kämmende Zahnrad durch zumindest ein elastisches Element in axialer Richtung gegeneinander gedrückt werden.

Bei den aus dem Stand der Technik bekannten Lösungen zur Rasseireduzierung werden zusätzliche Bauteile eingesetzt, was sich auf die Herstellungs- und Montagekosten negativ auswirkt. Zudem stellen diese Bauteile in nachteiliger Weise oft Verlustquellen hinsichtlich des Wirkungsgrades des Getriebes dar.

Heutzutage steigen die Anforderungen bezüglich der Unterdrückung von Geräuschemissionen von Kraftfahrzeugen, insbesondere von NKW's. Insbesondere für Getriebe in Vorgelegebauweise, umfassend zwei Vorgelegewellen und eine zentrale Hauptwelle besteht hinsichtlich der Reduzierung von Rasselgeräuschen Verbesserungsbedarf.

Der vorliegenden Erfindung liegt die Aufgabe zugrunde, eine Anordnung zur Rasselreduzierung bei einem Getriebe in Vorgelegebauweise, umfassend zwei Vorgelegewellen und eine Hauptwelle anzugeben, durch die die Rasselgeräusche weitgehend reduziert werden. Insbesondere soll die Rasselreduzierung keine zusätzlichen Verlustquellen im Getriebe erzeugen und ohne zusätzliche Bauteile erzielbar sein.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird vorgeschlagen, in einem Getriebe in Vorgelegebauweise, umfassend zwei Festräder aufweisende Vorgelegewellen und eine Losräder aufweisende lastausgleichend gelagerte Hauptwelle, bei dem die einzelnen Gänge durch Aktivierung jeweils einer Übersetzungsstufe, umfassend ein auf der Hauptwelle angeordnetes Losrad und jeweils ein auf jeder Vorgelegewelle angeordnetes Festrad die miteinander in Wirkverbindung stehen, erzeugt werden, wobei die Aktivierung der Übersetzungsstufen durch Betätigung eines Schaltelementes erfolgt, mittels dessen das jeweilige Losrad mit der Hauptwelle drehfest verbindbar ist, die Getriebeölpumpe zur Versorgung des Getriebes mit dem zum Betrieb, insbesondere zur Ölversorgung von Schaltelementen, Verzahnungen und Lagerungen notwendigen Druck- und Schmieröl auf der Hauptwelle anzuordnen.

Durch die erfindungsgemäße Konzeption, die Ölpumpe des Getriebes nicht auf einer der Vorgelegewellen wie aus dem Stand der Technik bekannt, sondern auf der Hauptwelle anzuordnen, wird eine signifikante Reduzierung der Rasselgeräusche bis zu 3dB erzielt. Hierbei stellen der hydrodynamische Gleitfilm und das Spiel des Rotors der Getriebeölpumpe die zur Reduzierung der Rasselgeräusche erforderliche Dämpfung dar.

Vorzugsweise ist das Spiel des Rotors der Pumpe größer als das zum Lastausgleich erforderliche Spiel der Hauptwelle. Bevorzugter Weise ist die Pumpe axial betrachtet in der Nähe der Einrichtung zur Realisierung des Rückwärtsganges angeordnet, wodurch ein besseres Ergebnis erzielbar ist, da der Rückwärtsgang aufgrund der erforderlichen Drehrichtungsumkehr die meisten Zahneingriffe aufweist. Die Ölpumpe kann beispielsweise als Innenzahnradpumpe ausgeführt sein.

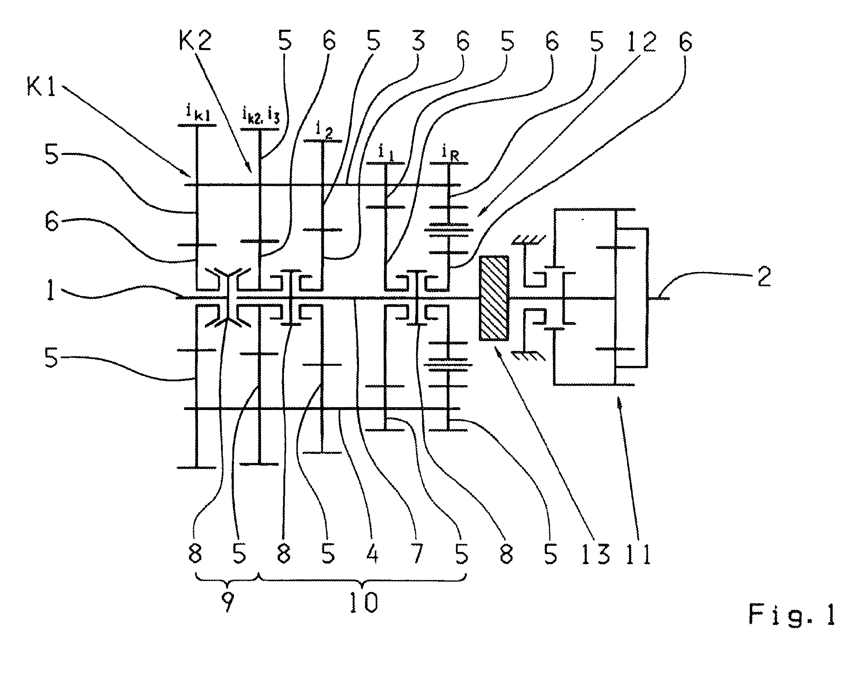

Die Erfindung wird im folgenden anhand der beigefügten Figur, welche eine schematische Darstellung eines Getriebes in Vorgelegebauweise mit zwei Vorgelegewellen ist, beispielhaft näher erläutert.

Der allgemeine Aufbau von Getrieben in Vorgelegebauweise umfassend zwei Vorgelegewellen ist dem Fachmann bestens bekannt, so dass im Rahmen der Figurenbeschreibung nur die erfindungsrelevanten Bauteile beschrieben und erläutert werden.

In der beigefügten Figur ist ein Getriebe in Vorgelegebauweise dargestellt. Es umfasst nach dem Stand der Technik eine Eingangswelle 1, eine Abtriebswelle 2, sowie zwei Vorgelegewellen 3, 4, auf denen Festräder 5 angeordnet sind, welche zur Bildung einer Übersetzungsstufe mit entsprechenden Losrädern 6 auf der Eingangswelle 1 und der Hauptwelle 7 kämmen, wobei die Losräder 6 durch Betätigung von Schaltelementen 8 mit der Eingangswelle 1 bzw. mit der Hauptwelle 7 verdrehfest verbindbar sind. Die zu übertragende Leistung teilt sich auf die Vorgelegewellen 3, 4 und fließt auf die Hauptwelle 7 zurück. Des weiteren ist eine Einrichtung 12 zur Realisierung des Rückwärtsganges vorgesehen.

Das gezeigte Getriebe umfasst in an sich bekannter Art und Weise eine Splittergruppe 9 mit zwei Antriebskonstanten K1 und K2, ein Hauptgetriebe 10 und eine in Planetenbauweise ausgeführte Range-Gruppe 11 auf; die erfindungsgemäße Konzeption ist jedoch nicht auf das dargestellte Drei-Gruppen-Getriebe beschränkt, sondern bei allen Getrieben in Vorgelegebauweise umfassend zwei Vorgelegewellen und eine lastausgleichend gelagerte Hauptwelle anwendbar.

Gemäß der Erfindung ist die Ölpumpe 13 des Getriebes auf der Hauptwelle 7 angeordnet und wird von dieser angetrieben, was in einer signifikanten Rasselreduzierung resultiert, wobei das Spiel des Rotors der Ölpumpe 13 gröβer ist als das zum Lastausgleich erforderliche Spiel der Hauptwelle 7. Wie anhand der beigefügten Figur veranschaulicht, ist die Ölpumpe vorzugsweise axial betrachtet in der Nähe der Einrichtung 12 zur Realisierung des Rückwärtsganges angeordnet.

Als Ölpumpe kann jede aus dem Stand der Technik bekannte Ölpumpe, beispielsweise eine Innenzahnradpumpe verwendet werden.

### Bezugszeichen

- 1: Eingangswelle
- 2: Abtrieb
- 3: Vorgelegewelle
- 4: Vorgelegewelle
- 5: Festrad
- 6: Losrad
- 7: Hauptwelle
- 8: Schaltelement
- 9: Splittergruppe
- 10: Hauptgetriebe
- 11: Orange - Gruppe
- 12: Einrichtung zur Realisierung des Rückwärtsgangs
- 13: Ölpumpe

## Patentansprüche

1. Anordnung zur Rasselreduzierung bei einem Getriebe in Vorgelegebauweise, umfassend zwei Vorgelegewellen (3, 4) und eine lastausgleichend gelagerte Hauptwelle (7), bei dem die einzelnen Gänge durch Aktivierung jeweils einer Übersetzungsstufe, umfassend ein auf der Hauptwelle (7) angeordnetes Losrad (6) und jeweils ein auf jeder Vorgelegewelle (3, 4) angeordnetes Festrad (5), die miteinander in Wirkverbindung stehen, erzeugt werden, wobei die Aktivierung der Übersetzungsstufen durch Betätigung eines Schaltelementes (8) erfolgt, mittels dessen das jeweilige Losrad mit der Hauptwelle (7) drehfest verbindbar ist, **dadurch gekennzeichnet, dass** die Ölpumpe (13) des Getriebes auf der Hauptwelle (7) angeordnet ist.

2. Anordnung zur Rasselreduzierung bei einem Getriebe in Vorgelegebauweise, nach Anspruch 1, **dadurch gekennzeichnet, dass** die Ölpumpe (13) des Getriebes auf der Hauptwelle (7) axial betrachtet in der Nähe der Einrichtung (12) zur Realisierung des Rückwärtsganges angeordnet ist.

3. Anordnung zur Rasselreduzierung bei einem Getriebe in Vorgelegebauweise, nach Anspruch 1 oder 2, **dadurch gekennzeichnet, dass** das Spiel des Rotors der Ölpumpe (13) größer ist, als das zum Lastausgleich erforderliche Spiel der Hauptwelle (7).

4. Anordnung zur Rasselreduzierung bei einem Getriebe in Vorgelegebauweise, nach Anspruch 1, 2, 3 oder 4, **dadurch gekennzeichnet, dass** die Ölpumpe (13) als Innenzahnradpumpe ausgebildet ist.

## Claims

1. Arrangement for reducing rattling in a countershaft-type gearbox, comprising two countershafts (3, 4) and a main shaft (7) which is mounted in load-compensating fashion, in which the individual gears are realized by activating in each case one transmission stage comprising a loose gear (6) arranged on the main shaft (7) and in each case one fixed gear (5) arranged on each countershaft (3, 4), which loose gear (6) and fixed gear (5) are operatively connected to one another, with the transmission stages being activated by actuating a shift element (8) by means of which the respective loose gear can be rotationally fixedly connected to the main shaft (7), **characterized in that** the oil pump (13) of the gearbox is arranged on the main shaft (7).

2. Arrangement for reducing rattling in a countershaft-type gearbox according to Claim 1, **characterized in that** the oil pump (13) of the gearbox is arranged on the main shaft (7) axially in the vicinity of the device (12) for realizing a reverse gear.

3. Arrangement for reducing rattling in a countershaft-type gearbox according to Claim 1 or 2, **characterized in that** the play of the rotor of the oil pump (13) is greater than the play of the main shaft (7) required for load compensation.

4. Arrangement for reducing rattling in a countershaft-type gearbox according to Claim 1, 2 or 3, **characterized in that** the oil pump (13) is designed as an internal gear pump.

## Revendications

1. Agencement pour réduire les tremblements dans une boîte de vitesses de construction avec boîte intermédiaire, comprenant deux arbres intermédiaires (3, 4) et un arbre principal (7) monté de manière à équilibrer les charges, dans lequel les vitesses individuelles sont obtenues en activant à chaque fois un étage de multiplication, comprenant un pignon fou (6) disposé sur l'arbre principal (7) et un pignon fixe (5) respectif disposé sur chaque arbre intermédiaire (3, 4), lesquels sont en liaison fonctionnelle l'un avec l'autre, l'activation des étages de multiplication s'effectuant en activant un élément de sélection (8) au moyen duquel le pignon fou respectif peut être connecté de manière solidaire en rotation à l'arbre principal (7), **caractérisé en ce que** la pompe à huile (13) de la boîte de vitesses est disposée sur l'arbre principal (7).

2. Agencement pour réduire les tremblements dans une boîte de vitesses de construction avec boîte intermédiaire selon la revendication 1, **caractérisé en ce que** la pompe à huile (13) de la boîte de vitesses sur l'arbre principal (7), considérée axialement, est disposée à proximité du dispositif (12) pour réaliser la vitesse arrière.

3. Agencement pour réduire les tremblements dans une boîte de vitesses de construction avec boîte intermédiaire selon la revendication 1 ou 2, **caractérisé en ce que** le jeu du rotor de la pompe à huile (13) est supérieur au jeu de l'arbre principal (7) requis pour l'équilibrage des charges.

4. Agencement pour réduire les tremblements dans une boîte de vitesses de construction avec boîte intermédiaire selon la revendication 1, 2, ou 3, **caractérisé en ce que** la pompe à huile (13) est réalisée sous forme de pompe à roue dentée intérieure.
